(19) Europäisches Patentamt

European Patent Office

Office européen des brevets

(11) Numéro de publication : **0 079 291**

**B1**

(12) FASCICULE DE BREVET EUROPÉEN

(45) Date de publication du fascicule du brevet :
07.08.85

(21) Numéro de dépôt : 82402058.0

(22) Date de dépôt : 09.11.82

(51) Int. Cl.⁴ : **F 16 B 39/08**, F 16 B 39/12,
F 16 B 39/36

(54) Ensemble d'écrous freinés à double freinage.

(30) Priorité : 10.11.81 FR 8121021

(43) Date de publication de la demande :
18.05.83 Bulletin 83/20

(45) Mention de la délivrance du brevet :
07.08.85 Bulletin 85/32

(84) Etats contractants désignés :
AT BE CH DE FR GB IT LI NL SE

(56) Documents cités :
DE-A- 2 042 042
FR-A- 1 600 288
FR-A- 2 058 607
FR-A- 2 396 199
US-A- 1 891 358

(73) Titulaire : **SHUR-LOK INTERNATIONAL S.A. Société
dite:
Rue du Midi 7-9
B-4822 Petit-Rechain (BE)**

(72) Inventeur : **Heurteux, Bernard Marc
12 Rue de l'Union
Verviers (BE)**

(74) Mandataire : **Polus, Camille et al
c/o Cabinet Lavoix 2, Place d'Estienne d'Orves
F-75441 Paris Cedex 09 (FR)**

### Description

La présente invention est relative aux systèmes d'écrous de sécurité à couple de freinage contrôlé.

On connaît de nombreux systèmes pour freiner des écrous en position, et l'on peut d'une façon générale classer ces systèmes en deux grandes catégories qui sont d'une part les écrous à freinage positif, et d'autre part les écrous auto-freinés.

Les systèmes à freinage positif comportent habituellement des moyens de butée, par exemple l'écrou comporte une jupe présentant des créneaux à travers lesquels on peut introduire une goupille dans un trou diamétral de l'arbre, du boulon ou autre sur lequel est vissé l'écrou, empêchant ainsi celui-ci de tourner.

Avec un tel dispositif il n'est pas possible d'appliquer à l'écrou un couple de serrage précis donné, la position finale de l'écrou serré étant imposée par la position relative des créneaux et du trou diamétral de l'arbre ou du boulon.

Les systèmes d'écrous auto-freinés comportent habituellement soit une partie déformable prévue sur l'écrou, soit une rondelle déformable, solidaire ou non de l'écrou, à travers laquelle se prolonge le filetage intérieur de l'écrou et que l'on déforme avant ou après la mise en place de l'écrou ou de la rondelle.

Ce système rend difficile l'application d'un couple de serrage précis en raison du couple de freinage dont il faut bien entendu tenir compte. En outre, le couple de freinage obtenu par déformation de la rondelle ou de la partie appropriée de l'écrou peut se détériorer, par exemple par suite de vibrations ou par usure et sa valeur diminue alors de façon brusque et aucune butée mécanique ne s'oppose ensuite au desserrage. Les mêmes observations s'appliquent également aux dispositifs comportant une bague de friction rendue solidaire de l'écrou.

On a en conséquence recherché différentes solutions permettant à la fois un serrage de l'écrou à un couple précis avec auto-freinage et son immobilisation positive.

Parmi les diférentes solutions proposées on a décrit notamment au FR-A-2 058 607 un dispositif d'écrou et de contre-écrou de sécurité comprenant un écrou principal ayant un filetage externe à pas fin et une partie tronconique déformable adjacente, et un écrou de sécurité ayant un filetage interne à pas fin et une partie tronconique complémentaires respectivement de ceux de l'écrou principal.

Dans cet agencement, la partie tronconique déformable de l'écrou principal est resserrée par la partie correspondante de l'écrou de sécurité sur le boulon ou autre organe fileté sur lequel est vissé l'écrou principal.

Ce système présente l'inconvénient de ne pas être freiné positivement.

On connaît par ailleurs un dispositif décrit au FR-A-2 396 199 dans lequel on utilise un écrou de type ordinaire comportant d'une part une sortie de filetage conique (portion de profondeur de filet décroissante) et, d'autre part une série de créneaux.

Lorsque cet écrou est vissé et serré à un couple donné, la sortie de filetage conique exerce une action de freinage, tandis que les créneaux permettent de disposer une goupille à travers un trou de l'organe fileté sur lequel est vissé l'écrou.

Ce système présente de graves défauts : tout d'abord cet écrou du type ordinaire est fileté sur toute la longueur de son trou axial et de ce fait la sortie de filetage conique délimite une très fine arête de métal telle que le frottement de freinage lors du vissage supprime cette arête par simple usure immédiate, supprimant ainsi du même coup l'effet de freinage.

Cette usure est d'autant plus forte que, comme tous les systèmes à créneaux, ceux-ci ne se trouvent presque jamais en alignement avec le trou de goupille et que l'on doit de plus faire tourner l'écrou pour l'amener en position, aggravant ainsi l'usure de la sortie de filetage et modifiant le couple de freinage.

L'invention a pour but de remédier à ces inconvénients en réalisant un dispositif de freinage d'écrou de sécurité à couple de freinage contrôlé permettant un réglage précis du couple de serrage de l'écrou principal et comportant des moyens de freinage positifs.

L'invention a pour objet à cet effet un ensemble d'écrous freinés, à double freinage, du type comportant un écrou de sécurité ayant un filetage interne à pas fin coopérant avec un filetage externe complémentaire d'un écrou principal, lesdits écrous comportant des parties tronconiques coopérant ensemble, caractérisé en ce que l'une au moins desdites parties tronconiques est constituée par une portion de profondeur de filet décroissante de l'un au moins desdits filetages à pas fin, ledit ensemble comportant des moyens d'immobilisation de l'écrou de sécurité par rapport à l'élément sur lequel est destiné à être vissé l'écrou principal.

Grâce à cet agencement, on dispose d'un ensemble pouvant être vissé unitairement sur un arbre, un axe ou autre organe fileté en appliquant à l'écrou principal un couple de serrage désiré, l'écrou de sécurité pouvant ensuite être verrouillé positivement avec ledit couple de freinage prédéterminé sans autre opération.

Suivant une autre caractéristique de l'invention, ladite portion de profondeur de filet décroissante appelée ci-après sortie conique de filetage est suivie d'une plage lisse dont le diamètre externe est égal au diamètre hors tout dudit filetage.

Grâce à cet agencement, on obtient à la sortie du filetage une partie massive résistante à l'usure.

Suivant une autre caractéristique de l'invention la partie tronconique de l'écrou principal est constituée par le fond dudit filetage externe comportant une sortie conique, le filetage interne de l'écrou de sécurité étant cylindrique.

Suivant un autre mode de réalisation, la partie tronconique de l'écrou de sécurité est constituée par le fond dudit filetage interne comportant une sortie conique, le filetage externe de l'écrou principal étant cylindrique.

Dans une variante, les parties tronconiques de l'écrou principal et de l'écrou de sécurité sont constituées par le fond de leur filetage respectif à pas fin, qui comporte une sortie conique, lesdites sorties étant de sens inverse.

Suivant un mode de réalisation préféré de l'invention, lesdits moyens de freinage positif de l'écrou de sécurité sont constitués par une jupe axiale à créneaux venue de matière.

D'autres caractéristiques et avantages de l'invention apparaîtront au cours de la description qui va suivre faite en se référant aux dessins annexés donnés uniquement à titre d'exemple et dans lesquels :

la Figure 1 est une vue en élévation latérale et en coupe partielles d'un ensemble d'écrous freinés suivant l'invention ;

la Figure 2 est une vue en élévation latérale et en coupe partielles de l'écrou de sécurité de l'ensemble représenté à la Fig. 1 ;

la Figure 3 est une vue en élévation latérale et en coupe partielles de l'écrou principal de l'ensemble représenté à la Fig. 1 ;

la Figure 4 est une vue en élévation latérale et en coupe partielles d'un ensemble d'écrous freinés suivant l'invention monté sur un arbre fileté ;

la Figure 5 est une vue analogue à celle de la Figure 1 d'une variante ;

la Figure 6 est une vue en élévation latérale et en coupe partielles de l'écrou de sécurité d'un autre mode de réalisation de l'ensemble suivant l'invention ;

la Figure 7 est une vue en élévation latérale et en coupe partielles de l'écrou principal adapté pour coopérer avec l'écrou représenté à la Figure 6 ;

la Figure 8 est une vue partielle en coupe d'une autre variante dans laquelle les filetages à pas fin de l'écrou principal et de l'écrou de sécurité comportent chacune une sortie conique.

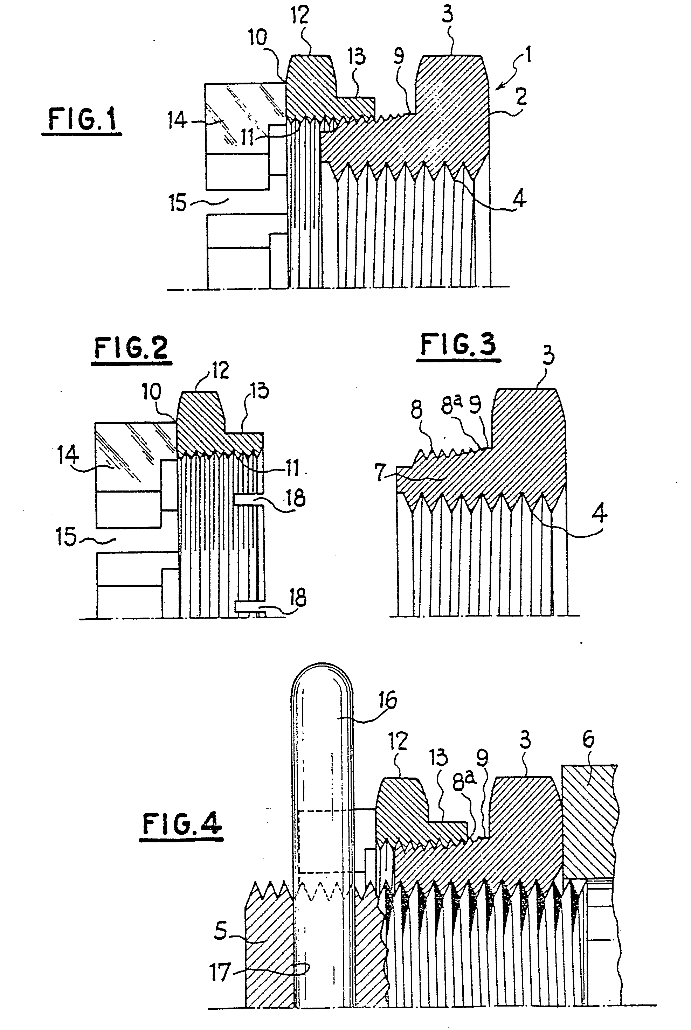

L'ensemble d'écrous représenté à la Figure 1 comprend un écrou principal 1 sur lequel est vissé un écrou de sécurité freiné 10 avec un couple de serrage prédéterminé.

L'écrou principal 1 comporte un corps proprement dit désigné par la référence 2 ayant, comme connu en soi, une surface périphérique hexagonale 3 à pas coupés permettant l'usage d'une clé.

L'alésage central de l'écrou 1 comporte un filetage 4 adapté pour coopérer avec le filetage externe d'un arbre 5 utilisé pour fixer un élément quelconque (non représenté) par exemple sur une plaque 6 à travers laquelle s'étend l'extrémité de l'arbre 5 (Fig. 4).

L'écrou 1 comporte sur sa face arrière (partie de gauche en considérant le dessin) un appendice cylindrique 7 s'étendant axialement, venu de matière avec le corps 2 de l'écrou, et présentant un filetage 8 à pas fin s'étendant à partir de l'extrémité de l'appendice 7 vers la partie hexagonale 3 mais se terminant avant celle-ci, en étant ainsi suivi d'une plage lisse 9.

le filetage 8 à pas fin présente une sortie conique, comme représenté en 8a à la figure 3. Le fond de ce filetage formant une partie tronconique qui se raccorde à la surface de la plage lisse 9 qui le sépare de la partie hexagonale 3.

Le diamètre hors tout du filetage 8 est égal au diamètre externe de la plage lisse 9.

L'écrou de sécurité représenté à la figure 2 comprend un corps 10 dont l'alésage central comporte un filetage intérieur cylindrique 11 à pas fin, adapté pour coopérer avec le filetage 8 prévu sur l'appendice 7 de l'écrou 1.

L'écrou de sécurité comporte également une partie hexagonale 12 et, sur sa face avant, un chambrage délimité par un rebord cylindrique 13 s'étendant axialement et sur sa face opposée ou face arrière une jupe cylindrique 14 s'étendant axialement et présentant plusieurs créneaux 15.

Comme représenté à la figure 1, l'écrou de sécurité 10 est vissé sur le filetage 8 de l'écrou 1 jusqu'à obtenir un couple de freinage désiré par serrage du rebord 13 sur le fond du filetage 8 à la sortie conique de celui-ci.

Lorsque le couple de freinage désiré par l'utilisateur, ou imposé par l'usage particulier auquel l'ensemble est destiné, comme par exemple dans certaines applications dans l'aéronautique, est atteint, ce qui peut être facilement effectué au moyen d'une clé dynamométrique, l'ensemble est prêt à être livré à l'utilisateur.

Celui-ci visse alors directement l'ensemble sur l'organe fileté 5 en présentant l'écrou principal 1 en premier.

Lorsque le couple de serrage désiré pour l'écrou principal sur la plaque 6 est atteint, on dispose une goupille d'arrêt 16 dans un trou diamétral 17 de l'extrémité de l'organe 5 et, si deux créneaux 15 diamétralement opposés ne sont pas alignés avec les extrémités du trou 16, on fait légèrement tourner l'écrou 10 dans le sens voulu pour amener les deux créneaux 15 les plus proches du trou 17 en alignement avec ce dernier.

Les filetages 8 et 11 ayant un pas fin la modification de position angulaire de l'écrou de sécurité 10 n'a qu'une incidence négligeable sur la valeur du couple de serrage désiré pour le freinage.

La pente du fond du filetage 8 à la sortie conique de celui-ci et le pas des filetages 8 et 11 sont choisis de manière que l'augmentation du couple de serrage de l'écrou de sécurité soit lente et progressive au fur et à mesure de la rotation de ce dernier et qu'aucune déformation permanente du rebord 13 ne se produise pour un couple de serrage maximum de l'écrou de sécurité. Ce couple de serrage maximum peut être choisi comme étant par exemple égal à 75 % du couple de serrage maximum admis pour l'écrou principal 1.

L'épaisseur du rebord 13 est choisie de façon appropriée pour présenter une certaine résistance à la déformation, cette résistance pouvant cependant être rendue relativement élastique par exemple en ménageant des fentes 18 dans le rebord.

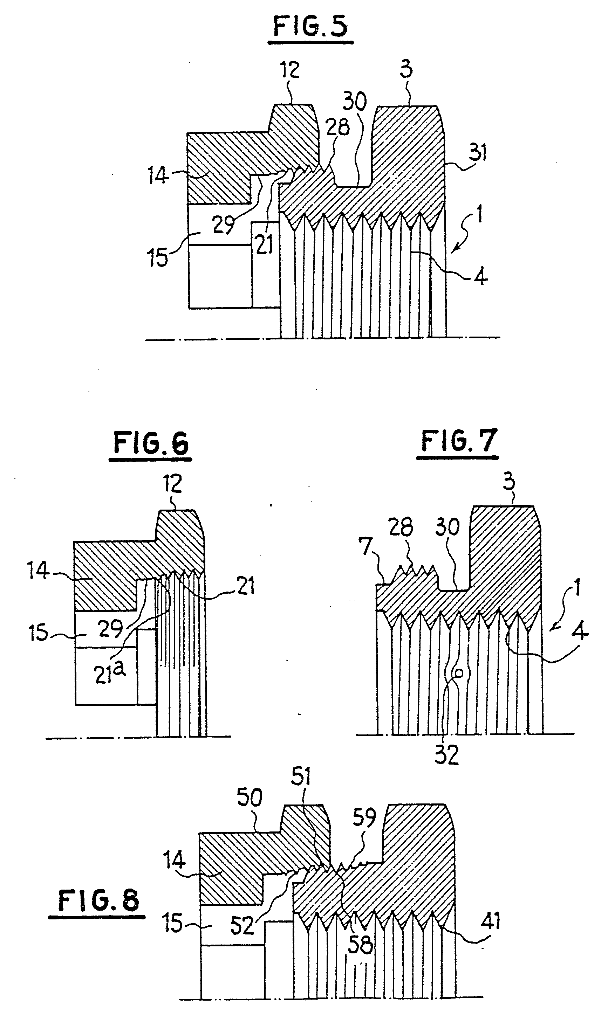

On a représenté aux Figures 5 à 8 une variante dans laquelle les parties analogues ont été désignées par les mêmes références et dans laquelle le filetage à pas fin 28 de l'écrou principal est cylindrique, tandis que le filetage 21 à pas fin de l'écrou de sécurité adapté pour coopérer avec celui-ci est un filetage à sortie conique, comme représenté aux Fig. 5 et 6.

Comme dans l'exemple précédent, le filetage 21 à sortie conique est suivi d'une plage lisse 29. Dans cet exemple, l'écrou de sécurité est dépourvu du rebord axial 13.

L'écrou principal 31 comporte une gorge périphérique 30 formée entre le filetage 28 et la partie hexagonale 3, à la place de la plage lisse 9.

La paroi de cette gorge peut avantageusement être déformée en un ou plusieurs points 32 radialement vers l'intérieur, par exemple par des coups de pointeau pour assurer un freinage supplémentaire de l'écrou principal par déformation localisée de son filetage intérieur 4.

Dans cette variante le couple de freinage désiré est obtenu par le frottement de l'extrémité de l'appendice 7 sur le fond 21a du filetage à pas fin 21 de l'écrou de sécurité, à la sortie conique de celui-ci.

L'utilisation de ce mode de réalisation est identique à celle du premier. Il fournit cependant un freinage supplémentaire.

En se référant enfin à la Fig. 8, on a représenté seulement les filetages à pas fin en prise de l'écrou principal 41 et de l'écrou de sécurité 50, d'une seconde variante dans laquelle ces deux filetages 58, 51 respectivement comportent chacun une sortie conique en sens opposé comme représenté en 59 et 52 suivie chacune d'une plage lisse de même diamètre.

L'invention fournit ainsi un ensemble d'écrous à double freinage dont l'un est positif et l'autre peut être pré-réglé, et qui peut être posé en une seule opération simple et rapide, et permet de maintenir avec une grande précision un couple de freinage pouvant atteindre jusqu'à 75 % du couple de serrage désiré pour l'écrou principal, ce maintien étant assuré par les moyens mécaniques constitués par la goupille 16 disposée en prise dans l'arbre portant l'écrou principal.

### Revendications

1. Ensemble d'écrous freinés, à double freinage, du type comportant un écrou de sécurité (10) ayant un filetage interne (11) à pas fin coopérant avec un filetage externe (8) complémentaire d'un écrou principal (1), lesdits écrous comportant des parties tronconiques coopérant ensemble, caractérisé en ce que l'une au moins (8a) desdites parties tronconiques est constituée par une portion de profondeur de filet décroissante de l'un au moins desdits filetages à pas fin (8, 11), ledit ensemble comportant des moyens (14) d'immobilisation de l'écrou de sécurité (10) par rapport à l'élément (5) sur lequel est vissé l'écrou principal (1).

2. Ensemble d'écrous freinés suivant la revendication 1, caractérisé en ce que ladite portion de profondeur de filet décroissante (8a, 21a) est suivie d'une plage lisse (9, 29) dont le diamètre externe est égal au diamètre hors tout dudit filetage (8, 21).

3. Ensemble d'écrous freinés suivant la revendication 2, caractérisé en ce que la partie tronconique de l'écrou principal (1) est constituée par le fond dudit filetage externe (8) comportant une portion de profondeur de filet décroissante (8a), le filetage interne (1) de l'écrou de sécurité (10) étant cylindrique.

4. Ensemble d'écrous freinés suivant la revendication 2, caractérisé en ce que la partie tronconique de l'écrou de sécurité (10) est constituée par le fond dudit filetage interne (21) comportant une portion de profondeur de filet décroissante (21a), le filetage externe (28) de l'écrou principal (1) étant cylindrique.

5. Ensemble d'écrous freinés suivant la revendication 2, caractérisé en ce que les parties tronconiques de l'écrou principal (1) et de l'écrou de sécurité (10) sont constituées par le fond de leur filetage respectif à pas fin (51, 58) qui comporte une portion de profondeur de filet décroissante (52, 59).

6. Ensemble d'écrous freinés suivant l'une quelconque des revendications 1 à 5, caractérisé en ce que lesdits moyens d'immobilisation de l'écrou de sécurité sont constitués par une jupe axiale (14) à créneaux (15) venue de matière.

7. Ensemble d'écrous freinés suivant la revendication 3, caractérisé en ce que l'écrou de sécurité (10) comporte un rebord axial (13).

8. Ensemble d'écrous freinés suivant la revendication 7, caractérisé en ce que ledit rebord axial (13) comporte des fentes axiales (18).

9. Ensemble d'écrous freinés suivant l'une des revendications 1 à 8, caractérisé en ce que l'écrou principal (1) comporte une gorge périphérique (30) déformée en au moins un point (32) pour assurer du freinage supplémentaire de l'écrou principal.

### Claims

1. An assembly of nuts locked with a double locking, of the type comprising a safety nut (10) having a fine pitch inner thread (11) cooperative with a complementary outer thread (8) of a main nut (1), said nuts including frustoconical parts which cooperate with one another, characterised in that at least one (8a) of said frustoconical parts is formed by a portion having a decreasing thread depth of at least one of said fine pitch threads (8, 11), said assembly comprising means (14) for immobilizing the safety nut (10) relative to the element (5) on which the main nut (1) is screwed.

2. An assembly of locked nuts according to claim 1, characterised in that said portion of decreasing thread depth (8a, 21a) is followed by a smooth surface (9, 29) whose outside diameter is equal to the outside diameter of said thread (8, 21).

3. An assembly of locked nuts according to claim 2, characterised in that the frustoconical part of the main nut (1) is formed by the root of said outer thread (8) comprising a portion of decreasing thread depth (8a), the inner thread (1) of the safety nut (10) being cylindrical.

4. An assembly of locked nuts according to claim 2, characterised in that the frustoconical part of the safety nut (10) is formed by the root of said inner thread (21) comprising a portion of decreasing thread depth (21a), the outer thread (28) of the main nut (1) being cylindrical.

5. An assembly of locked nuts according to claim 2, characterised in that the frustoconical parts of the main nut (1) and of the safety nut (10) are formed by the root of their respective fine pitch thread (51, 55) which includes a portion of a decreasing thread depth (52, 59).

6. An assembly of locked nuts according to any one of the claims 1 to 5, characterised in that said means for immobilizing the safety nut are formed by an axial skirt (14) having castellations (15) in one piece with the safety nut.

7. An assembly of locked nuts according to claim 3, characterised in that the safety nut (10) comprises an axial flange (13).

8. An assembly of locked nuts according to claim 7, characterised in that said axial flange (13) includes axial slots (18).

9. An assembly of locked nuts according to any one of the claims 1 to 8, characterised in that the main nut (1) comprises a peripheral groove (30) which is deformed at at least one point (32) for providing an additional locking action of the main nut.

**Patentansprüche**

1. Sicherungsmutternsatz mit doppelter Sicherung, welcher eine Sicherungsmutter (10) mit einem Innenfeingewinde (11), welches mit einem komplementären Außengewinde (8) einer Hauptmutter (1) zusammenwirkt, aufweist, wobei die Muttern zusammenwirkende kegelstumpfförmige Abschnitte aufweisen, dadurch gekennzeichnet, daß wenigstens der eine (8a) der kegelstumpfförmigen Abschnitte durch einen Abschnitt mit abnehmender Gewindetiefe wenigstens eines der Feingewinde (8, 11) gebildet ist, wobei der Satz Mittel (14) zur Feststellung der Sicherungsmutter (10) bezüglich des Elements (5), auf welches die Hauptmutter (1) geschraubt ist, aufweist.

2. Sicherungsmutternsatz nach Anspruch 1, dadurch gekennzeichnet, daß der Abschnitt mit abnehmender Gewindetiefe (8a, 21a) von einem glatten Bereich (9, 29) gefolgt ist, dessen Außendurchmesser gleich dem über alles gemessenen Durchmesser des Gewindes (8, 21) ist.

3. Sicherungsmutternsatz nach Anspruch 2, dadurch gekennzeichnet, daß der kegelstumpfförmige Abschnitt der Hauptmutter (1) durch den Grund des Außengewindes (8) welches einen Abschnitt mit abnehmender Gewindetiefe (8a) aufweist, gebildet ist, wobei das Innengewinde (1) der Sicherungsmutter (10) zylindrisch ist.

4. Sicherungsmutternsatz nach Anspruch 3, dadurch gekennzeichnet, daß der kegelstumpfförmige Abschnitt der Sicherungsmutter (10) durch den Grund des Innengewindes (21), welches einen Abschnitt mit abnehmender Gewindetiefe (21a) aufweist, gebildet ist, wobei das Außengewinde (28) der Hauptmutter (1) zylindrisch ist.

5. Sicherungsmutternsatz nach Anspruch 2, dadurch gekennzeichnet, daß die kegelstumpfförmigen Abschnitte der Hauptmutter (1) und der Sicherungsmutter (10) durch den Grund von deren jeweiligem Feingewinde (51, 58), welcheseinen Abschnitt mit abnehmender Gewindetiefe (52, 59) aufweist, gebildet sind.

6. Sicherungsmutternsatz nach irgendeinem der Ansprüche 1 bis 5, dadurch gekennzeichnet, daß die Feststellmittel der Sicherungsmutter durch eine axiale Schürze (14) mit damit einstückige Zinnen(15) gebildet sind.

7. Sicherungsmutternsatz nach Anspruch 3, dadurch gekennzeichnet, daß die Sicherungsmutter (10) einen axialen Anschlagrand (13) aufweist.

8. Sicherungsmutternsatz nach Anspruch 7, dadurch gekennzeichnet, daß der axiale Anschlagrand axiale Schlitze (18) aufweist.

9. Sicherungsmutternsatz nach irgendeinem der Ansprüche 1 bis 8, dadurch gekennzeichnet, daß die Hauptmutter (1) eine in Umfangsrichtung verlaufende an wenigstens einem Punkt (32) verformte Kehle (30) zur Gewährleistung einer zusätzlichen Sicherung der Hauptmutter aufweist.

0 079 291

**FIG.1**

**FIG.2**     **FIG.3**

**FIG.4**

1

## FIG.5

## FIG.6

## FIG.7

## FIG.8